# EUROPEAN PATENT SPECIFICATION

(11) **EP 3 594 574 B1**
(45) Date of publication and mention of the grant of the patent: **13.05.2020**
(21) Application number: 18182678.5
(22) Date of filing: 10.07.2018
(51) Int. Cl.: F24D 13/02

(54) **COMPOSITE HEAT ADJUSTING DEVICE**
ZUSAMMENGESETZTE WÄRMESTELLUNGSVORRICHTUNG
DISPOSITIF DE RÉGLAGE DE CHALEUR COMPOSITE

(43) Date of publication of application: 15.01.2020
(73) Proprietor: E-poly Technology Co., Ltd., Hsinchu City (TW)
(72) Inventor: CHANG, I-Long, Hsinchu City (TW); LI, Lin, Hsinchu City (TW)
(74) Representative: 2K Patentanwälte Blasberg Kewitz & Reichel

(56) References cited:
- WO-A1-2009/090298
- WO-A2-2010/049770
- DE-A1-102006 017 093
- DE-A1-102015 015 144
- GB-A- 2 533 433

## Description

### TECHNICAL FIELD

The present invention relates to building materials applied to buildings and, in particular, to a composite heat adjusting device for heating interior floors and walls and defrosting snow or ice on building roofs.

### BACKGROUND

Heating systems for houses or large buildings are embedded in floors and are sized to fit the floor area, and they don't have a modular design. Since different buildings need different sizes of heating systems, complicated construction works are involved, which include assembling frames, supporters, or leveling elements. As a result, assembling or disassembling the heating system is difficult, so it is troublesome to remove or repair the heating systems.

Furthermore, many heating systems using electrical power have no electromagnetic interference (EMI) shielding properties, which have caused health concerns to users.

In view of this, the inventor studied various technologies and created an effective solution in the present disclosure.

### SUMMARY

It is an objective of the present invention to provide a composite heat adjusting device which can be assembled and disassembled easily to thereby facilitate repeated use.

It is another objective of the present invention to provide a composite heat adjusting device which has good heat transfer ability and also provides excellent electromagnetic interference (EMI) shielding properties and effective grounding.

A composite heat adjusting device according to the preamble of claim 1 is known from the patent DE102015015144A1. Accordingly, the present invention provides a composite heat adjusting device. The composite heat adjusting device includes a plurality of heat plates and an electrical connection member. Each the heat plate includes a substrate and a heating unit. The substrate includes a body and an installation element disposed on any side of the body. The heating unit includes a circuit board disposed in the installation element and includes at least one heating element disposed on the body and electrically connected to the circuit board. The electrical connection member includes a connection base and a plurality of connection portions disposed on the connection base. The connection portions are electrically connected through the connection base. The installation element of each heat plate is extended to form an installation recess to any corner of the heat plate. Each circuit board includes a plurality of connection terminals extended to the installation recess. The connection terminal is connected to the corresponding connection portion of the electrical connection member, so that the heat plates are electrically connected to each other.

Accordingly, the present invention provides a composite heat adjusting device. The composite heat adjusting device includes a protection cover. The protection cover consists of metal to transfer the heat generated from a heating element to the protection cover. The protection cover provides good EMI shielding properties and effective grounding.

### BRIEF DESCRIPTION OF THE DRAWINGS

The disclosure will become more fully understood from the detailed description and the drawings given herein below for illustration only, and thus does not limit the disclosure, wherein:
FIG. 1 is a perspective exploded view illustrating a composite heat adjusting device according to the present invention;
FIG. 2 is a partial perspective exploded view of the composite heat adjusting device;
FIG. 3 is a planar view illustrating assembly of an electrical connection member of the composite heat adjusting device;
FIG. 4 is a perspective assembled view illustrating the electrical connection member;
FIG. 5 is a partial perspective view from another viewing angle illustrating assembling the electrical connection members to the heat plates;
FIG. 6 is a partial cross-sectional view illustrating each heat plate and the electrical connection member;
FIG. 7 is a schematic view illustrating one example arrangement of the present invention;
FIG. 8 is a schematic view illustrating one cutting example of the present invention;
FIG. 9 is a schematic view illustrating another cutting example of the present invention;
FIG. 10 is a schematic view illustrating that an insulation cover is applied to the composite heat adjusting device after cutting of the heat plate;
FIG. 11 is a partial perspective exploded view of the composite heat adjusting device according to another embodiment of the present invention; and
FIG. 12 is a schematic view illustrating an example arrangement of the composite heat adjusting device according to another embodiment of the present invention.

### DETAILED DESCRIPTION

Detailed descriptions and technical contents of the present disclosure are illustrated below in conjunction with the accompanying drawings. However, it is to be understood that the descriptions and the accompanying drawings disclosed herein are merely illustrative and exemplary and not intended to limit the scope of the present disclosure.

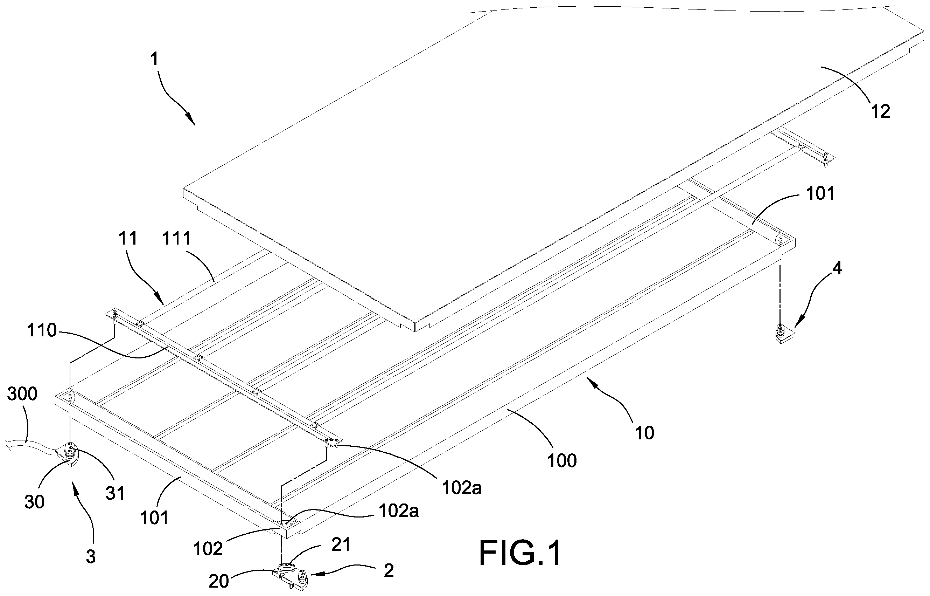

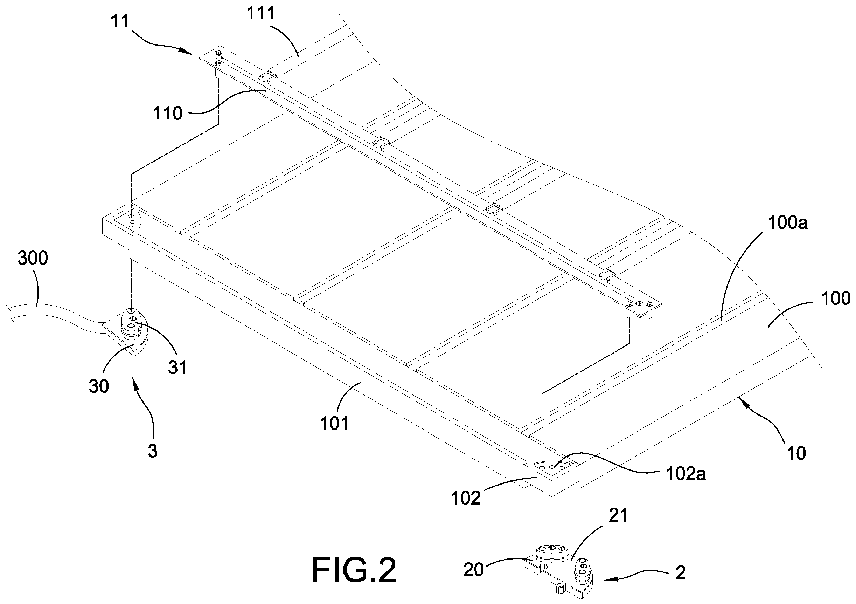

Please refer to Figs. 1 and 2 showing a perspective exploded view and a partial perspective exploded view illustrating the present invention. The present invention provides a composite heat adjusting device which includes a plurality of heat plates 1 and a plurality of electrical connection members 2.

Each heat plate 1 includes a substrate 10 and a heating unit 11. The substrate 10 serves as a base of the heat plate 1 used for heating. The substrate 10 includes a body 100 and an installation element 101 disposed on any side of the body 100. The body 100 can keep warm or serve as a buffer. The body 100 can be a plastic extruded board consisting of extruded polystyrene (XPS) or other thermal insulation board made of a thermal insulation material. The heating unit 11 includes a circuit board 110 disposed in the installation element 101 and includes at least one heating element 111 disposed on the body 100 and electrically connected to the circuit board 100. The heating element 111 is a positive-temperature-coefficient (PTC) thermistor or a self-regulation heating cable. One or more than one heating element 111 can be used according to the area of the body 100. It should be noted that, if the heating element 111 is the self-regulation heating cable that automatically adjusts their power output depending on the surrounding temperature or local temperatures, the overall temperature can be balanced to prevent overheating, so no temperature controllers are required to control the temperature. In addition to that, the self-regulation heating cable has an insulation layer. The insulation layer can endure high pressure, so international safety certifications (e.g. CSA) which indicate that products comply with requirements of international safety standards can be obtained easily. By this way, the heating element 111 not only has excellent insulation property but also improves safety in use.

The electrical connection member 2 is used to connect the heat plates 1, so that the heat plates 1 are electrically connected in parallel or in series. In particular, after the heat plates 1 are connected in parallel, although one heat plate 1 malfunctions or is broken, other heat plates 1 still function normally without being affected. The electrical connection member 2 has a connection base 20 and a plurality of connection portions 21 disposed on the connection base 20. The connection portions 21 are electrically connected through the connection base 20, so that the heat plates 1 are electrically connected to each other after the heat plates 1 are connected to the electrical connection members 2.

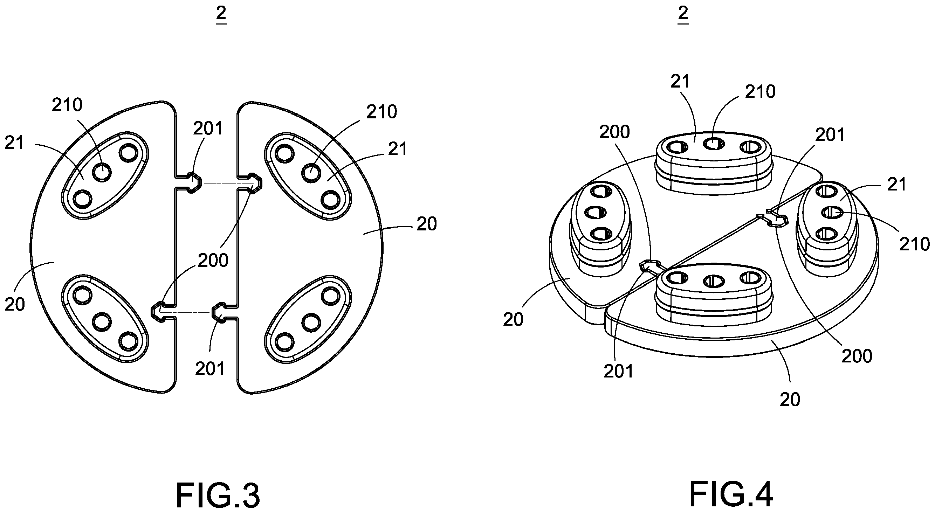

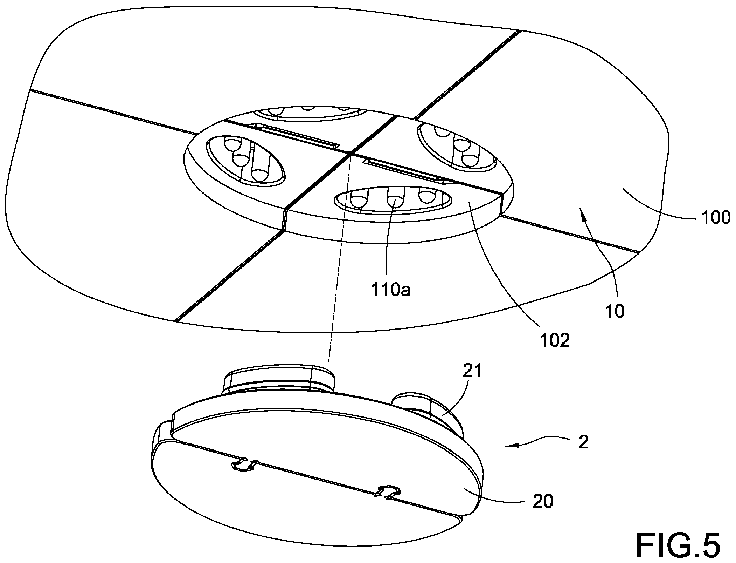

Referring to Figs. 3 to 5, the heat plates 1 are placed on the ground, walls, roofs, or other places with a large area. Then, through the electrical connection members 2, the heat plates 1 are electrically connected to each other. According to one embodiment of the present invention, the electrical connection member 2 can add additional connection portions 21 as required by means of the connection base 20, so as to connect more heat plates 1 (see Fig. 5). In detail, there can be multiple electrical connection members 2, and each electrical connection member 2 has a recessed connection hole 200 and a protruding connection pin 201 on the connection base 20. The electrical connection members 2 are correspondingly coupled to insert the respective connection pins 201 in the respective corresponding connection holes 200. As a result, the electrical connection members 2 can be produced by using one single modular mold, and can have more connection portions 21 as required.

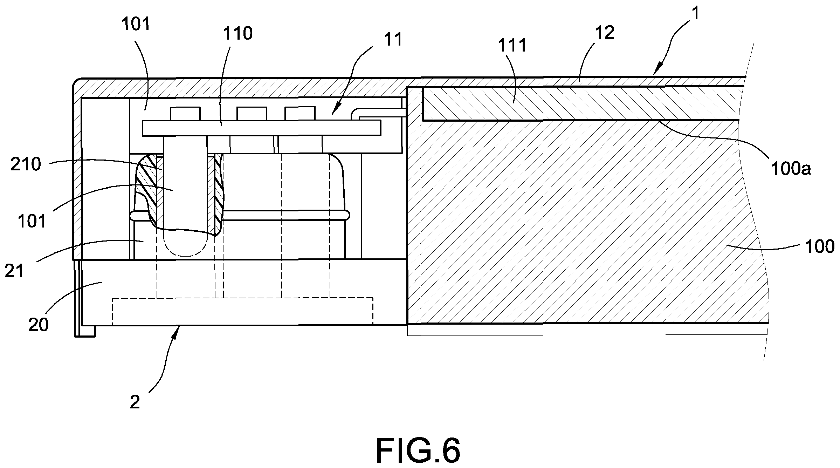

Referring to Figs. 1, 2 and 6, the installation element 101 of the heat plate 1 is extended to form an installation recess 102 at any corner of the heat plate 1. The circuit board 110 of each heating unit 11 includes a plurality of connection terminals 110a extended to the installation recess 102, and the connection terminal 110a is connected to the corresponding connection portion 21 of the electrical connection member 2, so that the heat plates 1 are electrically connected to each other. In detail, a plurality of terminal holes 210 for insertion of the connection terminals 110a are disposed on the connection portion 21 of the electrical connection member 2, so that the connection terminals 110a can be electrically connected by making electrical contact.

The body 100 of each heat plate 1 includes thereon a plurality of accommodating recesses 100a which correspond in number to the number of the heating elements 111. A reflection layer consisting of aluminum foil can be disposed on the body 100. Accordingly, the heat elements 111 are received in the respective accommodating recesses 100a and are distributed evenly on the body 100. A protection cover 12 is disposed on the body 100. The protection cover 12 is used for protection. The protection cover 12 can consist of metal, so that the heat generated from the heating element 111 can be transferred to the protection cover 12, and the protection cover 12 can also provide good electromagnetic interference (EMI) shielding properties and effective grounding.

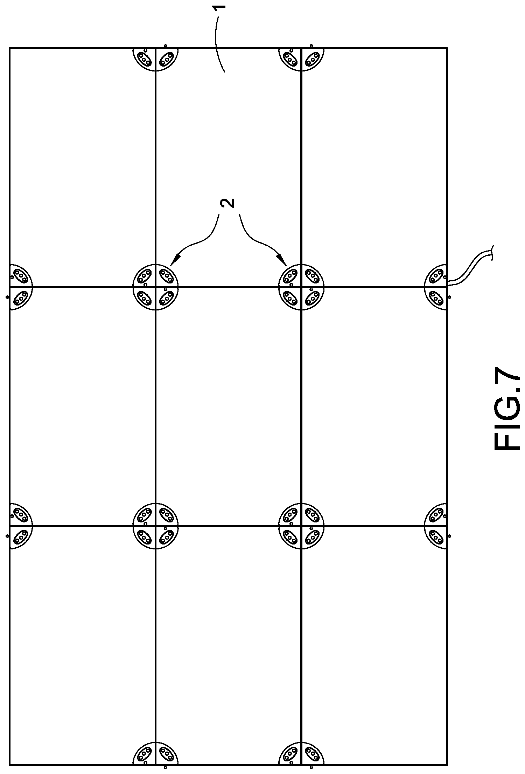

The present invention further comprises a power line 3. The power line 3 includes a power plug 30 and a wire 300 electrically connected to the power plug 30. The power plug 30 includes a power connection portion 31 which has the same structure as the connection portion 21 of the electrical connection member 2. Therefore, the power plug 30 can be disposed corresponding to the installation recess 102 of any heat plate 1 and then be electrically connected to the connection terminal 110a so as to supply power to the heating element 111 of each heat plate 1. In particular, after the heat plates 1 are arranged side by side, the installation recess 102 on an outer periphery is often unused and near a wall (see Fig. 7). Therefore, depending on the location of an interior power socket, the power line 3 can be connected to the installation recess 102 nearest to the interior power socket, and consequently, power distribution arrangement has fewer limitations. In addition, if the heat plate 1 has an unused installation recess 102, a plug 4 can be plugged in the unused installation recess 102 to prevent the connection terminals 110a from being electrically connected and getting short-circuited to cause dangers due to some unexpected reasons.

The composite heat adjusting device is constructed as mentioned above.

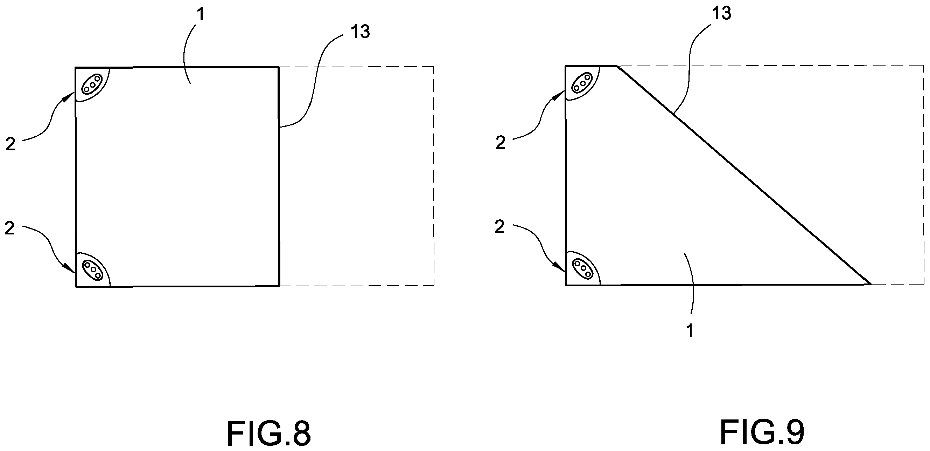

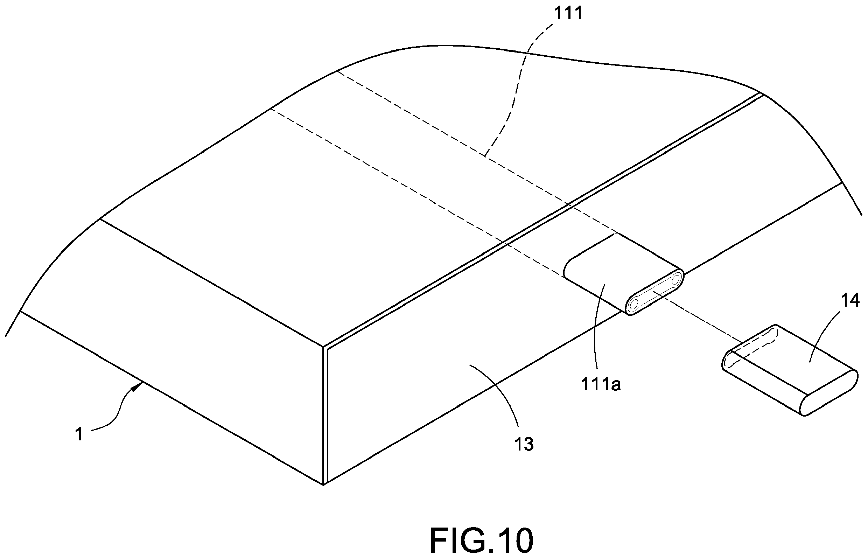

As shown in Fig. 7, according to one embodiment of the present invention, the heat plates 1 are arranged side by side longitudinally and transversely to pave the ground, roofs, or other places. However, the area to pave is often different from the whole area of the heat plates 1 put together. As a result, the heat plate 1 needs to be cut sometimes. Figs. 8 and 9 illustrate cutting examples of the present invention; however, the present invention is not limited in this regard. According to situations at different sites, the heat plate 1 is cut into a desired size and shape if the heat plate 1 has unwanted portions. A cut side 13 is formed on one side of the heat plate 1, an end portion 111a of the heating element 111 disposed inside the heat plate 1 is exposed from the cut side 13, and an insulation cover 14 is used to receive the end portion 111a (see Fig. 10).

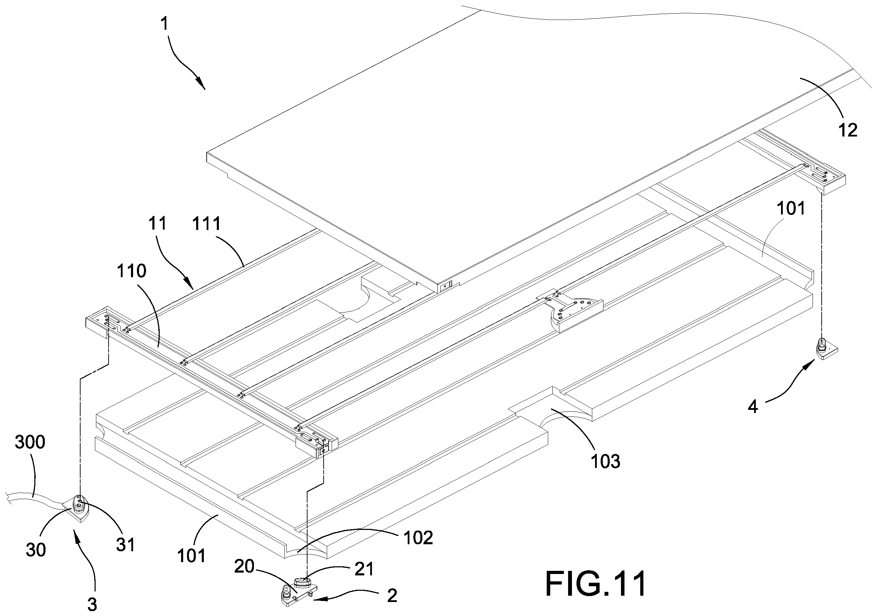

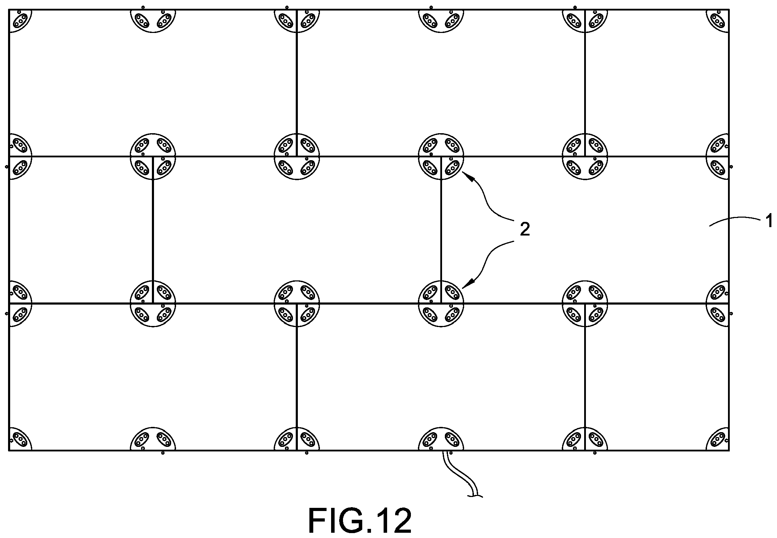

Moreover, as shown in Figs. 11 and 12, in order to arrange the heat plates 1 in a staggered manner, an auxiliary installation recess 103 is disposed on an edge of a middle section of the body 100, and another electrical connection member 2 is installed to any heating element 111 on the body 100 through the auxiliary installation recess 103. Hence, the staggered heat plate 1 can be electrically connected through the electrical connection member 2 in the auxiliary installation recess 103.

## Claims

1. A composite heat adjusting device, comprising:
a plurality of heat plates (1), each of the plurality of heat plates (1) including a substrate (10) and a heating unit (11), the substrate (10) including a body (100) and an installation element (101) disposed on any side of the body (100), the heating unit (11) including a circuit board (110) disposed in the installation element (101) and including at least one heating element (111) disposed on the body (100) and electrically connected to the circuit board (100); and
a plurality of electrical connection members (2), each of the electrical connection members (2) including a connection base (20) and a plurality of connection portions (21) disposed on the connection base (20), the connection portions (21) being electrically connected through the connection base (20), wherein the installation element (101) of each heat plate (1) is extended to form an installation recess (102) at any corner of the heat plate (1), each circuit board (110) includes a plurality of connection terminals (110a) extended to the installation recess (102), and the connection terminal (110a) is connected to the corresponding connection portion (21) of the electrical connection member (2), so that the heat plates (1) are electrically connected to each other,
**characterized in that** a plurality of terminal holes (210) for insertion of the connection terminals (110a) in a direction perpendicular to the heat plate (1) are disposed on the connection portion (21) of the electrical connection member (2), the composite heat adjusting device includes multiple electrical connection members (2), a recessed connection hole (200) and a protruding connection pin (201) are disposed on the connection base (20) of each electrical connection member (2), and the electrical connection members (2) are correspondingly coupled to insert the respective connection pins (201) in the respective corresponding connection holes (200).

2. The composite heat adjusting device according to claim 1, wherein a reflection layer is disposed on the body (100) of each heat plate (1), and the body (100) includes thereon at least one accommodating recess (100a) which corresponds in number to the number of the heating element (111).

3. The composite heat adjusting device according to claim 2, wherein the body (100) is a plastic extruded board consisting of extruded polystyrene.

4. The composite heat adjusting device according to claim 1, wherein the heating element (111) is a positive-temperature-coefficient thermistor or a self-regulation heating cable.

5. The composite heat adjusting device according to claim 1, wherein a protection cover (12) is disposed on the body (100), and the protection cover (12) consists of metal.

6. The composite heat adjusting device according to claim 1, further comprising a power line (3), the power line (3) including a power plug (30) and a wire (300) electrically connected to the power plug (30), and the power plug (30) including a power connection portion (31) which has the same structure as the connection portion (21) of the electrical connection member (2).

7. The composite heat adjusting device according to claim 1, further comprising a block plug (4) disposed corresponding to the installation recess (102).

8. The composite heat adjusting device according to claim 1, wherein an auxiliary installation recess (103) is disposed on an edge of a middle section of the body (100), and another electrical connection member (2) is installed to any heating element (111) on the body (100) through the auxiliary installation recess (103).

9. The composite heat adjusting device according to claim 1, wherein the connection base (20) has a quantity of two, and each connection base (20) also has two connection portions (21); the connection hole (200) and the connection pin (201) of the connection base (20) are located in the same side tor configure the electrical connection member (2) having four connection portions (21), and each electrical connection member (2) is corresponded to an assembled four heat plates (1).

10. The composite heat adjusting device according to claim 1, wherein a cut side (13) is formed on one side of any of the heat plates (1), an end portion (111a) of the heating element (111) is exposed from the cut side (13), and an insulation cover (14) receives the end portion (111a).

## Patentansprüche

1. Zusammengesetzte Wärmeeinstellvorrichtung, bestehend aus:
eine Vielzahl von Heizplatten (1), wobei jede der Vielzahl von Heizplatten (1) ein Substrat (10) und eine Heizeinheit (11) umfasst, wobei das Substrat (10) einen Körper (100) und ein Installationselement (101) umfasst, das auf einer beliebigen Seite des Körpers (100) angeordnet ist, wobei die Heizeinheit (11) eine Leiterplatte (110) umfasst, die in dem Installationselement (101) angeordnet ist und mindestens ein Heizelement (111) umfasst, das auf dem Körper (100) angeordnet und elektrisch mit der Leiterplatte (100) verbunden ist; und
mehrere elektrische Verbindungselemente (2), wobei jedes der elektrischen Verbindungselemente (2) eine Verbindungsbasis (20) und mehrere auf der Verbindungsbasis (20) angeordnete Verbindungsabschnitte (21) aufweist, wobei die Verbindungsabschnitte (21) durch die Verbindungsbasis (20) elektrisch verbunden sind, wobei das Installationselement (101) jeder Heizplatte (1) verlängert ist, um eine Installationsaussparung (102) an jeder Ecke der Heizplatte (1) zu bilden, jede Leiterplatte (110) eine Vielzahl von Verbindungsanschlüssen (110a) aufweist, die sich bis zur Installationsaussparung (102) erstrecken, und der Verbindungsanschluss (110a) mit dem entsprechenden Verbindungsabschnitt (21) des elektrischen Verbindungselements (2) verbunden ist, so dass die Heizplatten (1) elektrisch miteinander verbunden sind,
**dadurch gekennzeichnet, dass** eine Vielzahl von Anschlusslöchern (210) zum Einführen der Anschlussklemmen (110a) in einer Richtung senkrecht zur Heizplatte (1) auf dem Verbindungsabschnitt (21) des elektrischen Verbindungselements (2) angeordnet sind, wobei die zusammengesetzte Wärmeeinstellvorrichtung mehrere elektrische Verbindungselemente (2) umfasst, ein vertieftes Verbindungsloch (200) und ein vorstehender Verbindungsstift (201) an der Verbindungsbasis (20) jedes elektrischen Verbindungselements (2) angeordnet sind, und die elektrischen Verbindungselemente (2) entsprechend gekoppelt sind, um die jeweiligen Verbindungsstifte (201) in die jeweiligen entsprechenden Verbindungslöcher (200) einzuführen.

2. Zusammengesetzte Wärmeeinstellvorrichtung nach Anspruch 1, wobei auf dem Körper (100) jeder Heizplatte (1) eine Reflexionsschicht angeordnet ist und der Körper (100) darauf mindestens eine Aufnahmevertiefung (100a) aufweist, deren Anzahl der Anzahl des Heizelements (111) entspricht.

3. Zusammengesetzte Wärmeeinstellvorrichtung nach Anspruch 2, wobei der Körper (100) eine extrudierte Kunststoffplatte ist, die aus extrudiertem Polystyrol besteht.

4. Zusammengesetzte Wärmeeinstellvorrichtung nach Anspruch 1, wobei das Heizelement (111) ein Thermistor mit positivem Temperaturkoeffizienten oder ein selbstregulierendes Heizkabel ist.

5. Zusammengesetzte Wärmeeinstellvorrichtung nach Anspruch 1, wobei eine Schutzabdeckung (12) auf dem Körper (100) angeordnet ist und die Schutzabdeckung (12) aus Metall besteht.

6. Zusammengesetzte Wärmeeinstellvorrichtung nach Anspruch 1, die ferner eine Stromleitung (3) umfasst, wobei die Stromleitung (3) einen Stromstecker (30) und einen elektrisch mit dem Stromstecker (30) verbundenen Draht (300) umfasst und der Stromstecker (30) einen Stromanschlussabschnitt (31) umfasst, der die gleiche Struktur wie der Anschlussabschnitt (21) des elektrischen Verbindungselements (2) aufweist.

7. Zusammengesetzte Wärmeeinstellvorrichtung nach Anspruch 1, die ferner einen Blockstopfen (4) umfasst, der entsprechend der Einbauaussparung (102) angeordnet ist.

8. Zusammengesetzte Wärmeeinstellvorrichtung nach Anspruch 1, bei der eine Hilfs-Installationsaussparung (103) an einem Rand eines Mittelabschnitts des Körpers (100) angeordnet ist und ein weiteres elektrisches Verbindungselement (2) durch die Hilfs-Installationsaussparung (103) an ein beliebiges Heizelement (111) auf dem Körper (100) installiert ist.

9. Zusammengesetzte Wärmeeinstellvorrichtung nach Anspruch 1, wobei die Verbindungsbasis (20) eine Anzahl von zwei aufweist und jede Verbindungsbasis (20) auch zwei Verbindungsabschnitte (21) aufweist; das Verbindungsloch (200) und der Verbindungsstift (201) der Verbindungsbasis (20) sich in derselben Seite befinden, um das elektrische Verbindungselement (2) mit vier Verbindungsabschnitten (21) zu konfigurieren, und jedes elektrische Verbindungselement (2) einem zusammengesetzten vier Wärmeplatten (1) entspricht.

10. Zusammengesetzte Wärmeeinstellvorrichtung nach Anspruch 1, wobei eine Schnittseite (13) auf einer Seite einer der Heizplatten (1) ausgebildet ist, ein Endabschnitt (111a) des Heizelements (111) von der Schnittseite (13) aus freiliegt und eine Isolierabdeckung (14) den Endabschnitt (111a) aufnimmt.

## Revendications

1. Dispositif de réglage de chauffage composite, comprenant :
une pluralité de plaques de chauffage (1), chacune de la pluralité des plaques de chauffage (1) comprenant un substrat (10) et une unité chauffante (11), le substrat (10) comprenant un corps (100) et un élément d'installation (101) disposé sur n'importe quel côté du corps (100), l'unité chauffante (11) comprenant une carte de circuit imprimé (110) disposée dans l'élément d'installation (101) et comprenant au moins un élément chauffant (111) disposé sur le corps (100) et connecté électriquement à la carte de circuit imprimé (100) ; et
une pluralité d'éléments de connexion électriques (2), chacun des éléments de connexion électriques (2) comprenant une base de connexion (20) et une pluralité de parties de connexion (21) disposées sur la base de connexion (20), les parties de connexion (21) étant connectées électriquement par l'intermédiaire de la base de connexion (20), l'élément d'installation (101) de chaque plaque de chauffage (1) s'étendant pour former un évidement d'installation (102) à n'importe quel coin de la plaque de chauffage (1), chaque carte de circuit imprimé (110) comprenant une pluralité de bornes de connexion (110a) s'étendant jusqu'à l'évidement d'installation (102), et la borne de connexion (110a) étant connectée à la partie de connexion correspondante (21) de l'élément de connexion électrique (2), de telle sorte que les plaques de chauffage (1) sont connectées électriquement les unes aux autres,
**caractérisé par le fait qu'**une pluralité de trous de borne (210) pour l'insertion des bornes de connexion (110a) dans une direction perpendiculaire à la plaque de chauffage (1) sont disposés sur la partie de connexion (21) de l'élément de connexion électrique (2), le dispositif de réglage de chauffage composite comprend de multiples éléments de connexion électriques (2), un trou de connexion en retrait (200) et une broche de connexion en saillie (201) sont disposés sur la base de connexion (20) de chaque élément de connexion électrique (2), et les éléments de connexion électriques (2) sont couplés de manière correspondante pour insérer les broches de connexion respectives (201) dans les trous de connexion correspondants respectifs (200).

2. Dispositif de réglage de chauffage composite selon la revendication 1, dans lequel une couche de réflexion est disposée sur le corps (100) de chaque plaque de chauffage (1), et le corps (100) comprend sur celui-ci au moins un évidement de réception (100a) qui correspond en nombre au nombre de l'élément chauffant (111).

3. Dispositif de réglage de chauffage composite selon la revendication 2, dans lequel le corps (100) est un panneau extrudé en matière plastique constitué de polystyrène extrudé.

4. Dispositif de réglage de chauffage composite selon la revendication 1, dans lequel l'élément chauffant (111) est une thermistance à coefficient de température positif ou un câble chauffant à autorégulation.

5. Dispositif de réglage de chauffage composite selon la revendication 1, dans lequel un couvercle de protection (12) est disposé sur le corps (100), et le couvercle de protection (12) est constitué de métal.

6. Dispositif de réglage de chauffage composite selon la revendication 1, comprenant en outre une ligne d'alimentation (3), la ligne d'alimentation (3) comprenant une prise d'alimentation (30) et un fil électrique (300) connecté électriquement à la prise d'alimentation (30), et la prise d'alimentation (30) comprenant une partie de connexion d'alimentation (31) qui a la même structure que la partie de connexion (21) de l'élément de connexion électrique (2).

7. Dispositif de réglage de chauffage composite selon la revendication 1, comprenant en outre un bouchon obturateur (4) disposé en correspondance de l'évidement d'installation (102).

8. Dispositif de réglage de chauffage composite selon la revendication 1, dans lequel un évidement d'installation auxiliaire (103) est disposé sur un bord d'une section centrale du corps (100), et un autre élément de connexion électrique (2) est installé sur n'importe quel élément chauffant (111) sur le corps (100) à travers l'évidement d'installation auxiliaire (103).

9. Dispositif de réglage de chauffage composite selon la revendication 1, dans lequel la base de connexion (20) a une quantité de deux, et chaque base de connexion (20) a également deux parties de connexion (21) ; le trou de connexion (200) et la broche de connexion (201) de la base de connexion (20) sont situés du même côté pour configurer l'élément de connexion électrique (2) ayant quatre parties de connexion (21), et chaque élément de connexion électrique (2) correspond à quatre plaques de chauffage assemblées (1).

10. Dispositif de réglage de chauffage composite selon la revendication 1, dans lequel un côté coupé (13) est formé sur un côté de l'une quelconque des plaques de chauffage (1), une partie d'extrémité (111a) de l'élément chauffant (111) est exposée à partir du côté coupé (13), et un couvercle d'isolation (14) reçoit la partie d'extrémité (111a).
